**Europäisches Patentamt**

**European Patent Office**

**Office européen des brevets**

(19)

(11) Veröffentlichungsnummer: **0 019 583**

**A1**

(12) # EUROPÄISCHE PATENTANMELDUNG

(21) Anmeldenummer: **80810140.6**

(22) Anmeldetag: **28.04.80**

(51) Int. Cl.³: **F 16 D 65/10**

(30) Priorität: **11.05.79 DE 7913595 U**

(43) Veröffentlichungstag der Anmeldung:
**26.11.80 Patentblatt 80/24**

(84) Benannte Vertragsstaaten:
**AT BE CH DE FR GB IT LI NL SE**

(71) Anmelder: **Schweizerische Aluminium AG**

**CH-8212 Neuhausen am Rheinfall(CH)**

(72) Erfinder: **Hodel, Ulf**
**Eichendorfstrasse 1**
**D-7707 Engen(DE)**

(54) **Bremstrommel für Trommelbremse von Fahrzeugen.**

(57) Bei einer Bremstrommel für eine Trommelbremse von Fahrzeugen, deren schüsselartiges Trommelgehäuse (2) eine ringartige Innenfläche aus abriebfestem Werkstoff als Reibfläche für Bremsbeläge aufweist, ist das Trommelgehäuse aus Leichtmetall, insbesondere einer Aluminiumlegierung, geformt und an seiner Schüsselwandung mit zumindest einem Verbundprofil (P, $P_2$) aus einem Trägerprofil (7) und einer Stahlauflage (8) als Reibfläche fest verbunden. Diese Verbindung kann z.B. auf dem Wege des Strangpressens metallisch hergestellt sein.

Das Verbundprofil wird formschlüssig mit dem Trommelgehäuse verbunden, was durch ineinandergreifende Rastglieder der aneinanderliegenden Radialflächen von Trommelgehäuse und Verbundprofil geschieht.

./...

EP 0 019 583 A1

Croydon Printing Company Ltd.

Fig.1

- 1 -

## Bremstrommel für Trommelbremse von Fahrzeugen

Die Erfindung betrifft eine Bremstrommel für Trommelbremsen von Fahrzeugen, deren schüsselartige Trommelgehäuse eine ringartige Innenfläche aus Stahl od. dgl. abriebfestem Werkstoff als Reibfläche für Bremsbeläge aufweist.

Die beweglichen Fahrwerksteile eines Fahrzeuges -- z.B.Achse, Bremstrommel, Rad und Radaufhängung -- bilden eine gegenüber der Fahrzeugzelle abgefederte Masse. Um auch bei Fahrbahnstössen, welche höher frequente Schwingungen erzeugen, einen sicheren Bodenkontakt der Räder sicherzustellen, muss dieses Feder-Masse-System eine möglichst hohe Eigenfrequenz aufweisen, d.h. die Masse des Fahrwerkes muss möglichst klein gehalten werden. Dies führte zur Entwicklung von Leichtmetallrädern und Fahrwerksteilen aus geschmiedetem Aluminium.

Werden die drehend bewegten Teile des Fahrwerkes, also Felge und Bremstrommel, aus Leichtmetall gefertigt, so verringert sich nicht nur deren Masse sondern auch ihr Trägheitsmoment. Dadurch werden die zum Beschleunigen und Verzögern notwendigen Drehmomente reduziert.

Der Einsatz von Bremstrommeln aus dem Werkstoff Aluminium bzw. einer geeigneten Aluminiumlegierung anstelle des bislang üblichen Stahls war nicht möglich, da Aluminiumwerkstoffe im Vergleich zu Stahl eine zu geringe Abriebfestigkeit aufweisen. So würde anstatt der Bremsbeläge bei einer Aluminium-Bremstrommel das Trommelgehäuse selbst verschleissen.

So hat sich der Erfinder das Ziel gesetzt, eine Bremstrommel der eingangs erwähnten Art so zu verbessern, dass sie einerseits das gegenüber einer Stahlbremstrommel wesentlich kleinere Gewicht und Trägheitsmoment einer Aluminiumtrommel aufweist, andererseits aber an der Reibfläche der Bremsbeläge eine ebenso hohe Abriebfestigkeit wie eine Stahlbremstrommel anbietet.

Die Lösung dieser Aufgabe wird dadurch erreicht, dass das Trommelgehäuse aus Leichtmetall, insbesondere einer Aluminiumlegierung, geformt und an seiner Schüsselwandung mit zumindest einem Verbundprofil aus einem Trägerprofil und wenigstens einer Stahlauflage als Reibfläche fest verbunden ist. Dabei soll die bandartige Stahlauflage mit dem Trägerprofil auf dem Wege des Strangpressens metallisch verbunden sein.

Ein wesentlicher Vorteil der erfindungsgemässen Bremstrommel besteht in der Verwendung eines stranggepressten Verbundprofiles aus Aluminium mit einer Stahlauflage; die metallische Bindung zwischen Stahl und Aluminium ist temperatur- und korrosionsbeständig und in der Lage, hohe Kräfte zu übertragen.

Der Werkstoff Aluminium für den Bremstrommelkörper bringt beim Abführen der beim Bremsen entstehenden Reibungswärme weitere Vorteile, da die Wärmeleitfähigkeit von Aluminium ca. zehnmal so gross wie die von Stahl ist.

Zusammenfassend hat die Verbundbremstrommel Aluminium-Stahl gegenüber der Stahlbremstrommel vor allem die Vorzüge:

- niedrigeres Fahrwerkgewicht
- kleineres Trägheitsmoment
- bessere Wärmeabfuhr
- gleiche Abriebfestigkeit

Der Vorteil einer Verwendung eines Verbundprofiles aus einem Stahlband und einem Leichtmetallträgerprofil ist in der Vermeidung eines besonderen Arbeitsganges für die Verbindung der beiden Werkstoffe zu sehen; die Stahlauflage wird als unplattiertes Band mit dem Trägerprofil stranggepresst und anschliessend zu einem Ring gekrümmt, welche in das Trommelgehäuse ohne weiteres eingesetzt und durch Schweissnähte und/oder durch Einschrumpfen, aber auch im Rahmen der Erfindung durch Einkerbungen od. dgl. formschlüssig verbunden werden kann.

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:

Fig. 1    einen Querschnitt durch eine Bremstrommel, welche ein Verbundprofil aufweist;

Fig. 2    eine Schrägsicht auf einen Rohling des Verbundprofiles vor dem Einfügen in die Bremstrommel;

Fig. 3,   zwei weitere Ausführungsformen der Bremstrommel im 4    Querschnitt;

Fig. 5    eine Schrägsicht auf einen Ausschnitt der in Fig. 3 wiedergegebenen Bremstrommel.

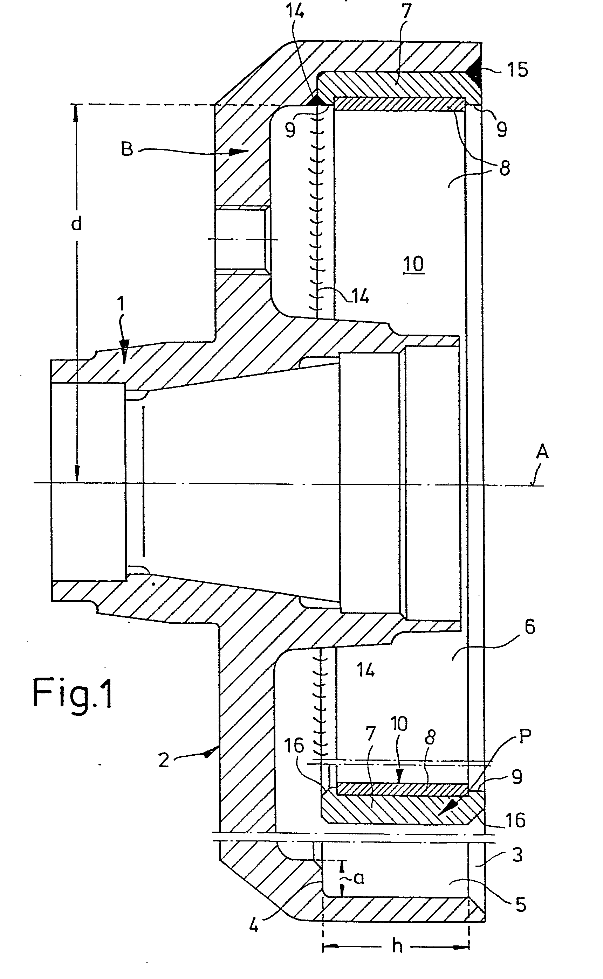

Eine Bremstrommel B weist gemäss Fig. 1 an einer Achsbüchse 1 ein schüsselartiges Trommelgehäuse 2 auf, von dessen nach innen geneigt abgefastem Gehäuserand 3 eine -- einen schulterartigen Abatz 4 der Breite a erzeugende -- Randeinformung 5 der Höhe h ausgeht.

In der Randeinformung 5 des aus Aluminium bzw. einer Aluminiumlegierung gefertigten Trommelgehäuses 2 sitzt koaxial zur Trommelachse A ein Ring 6 aus einem Verbundprofil P, dessen Querschnitt in der unteren Figurenhälfte hervorgehoben ist und an einem Trägerprofil 7 aus Aluminium ein damit verbundenes Stahlband 8 erkennen lässt.

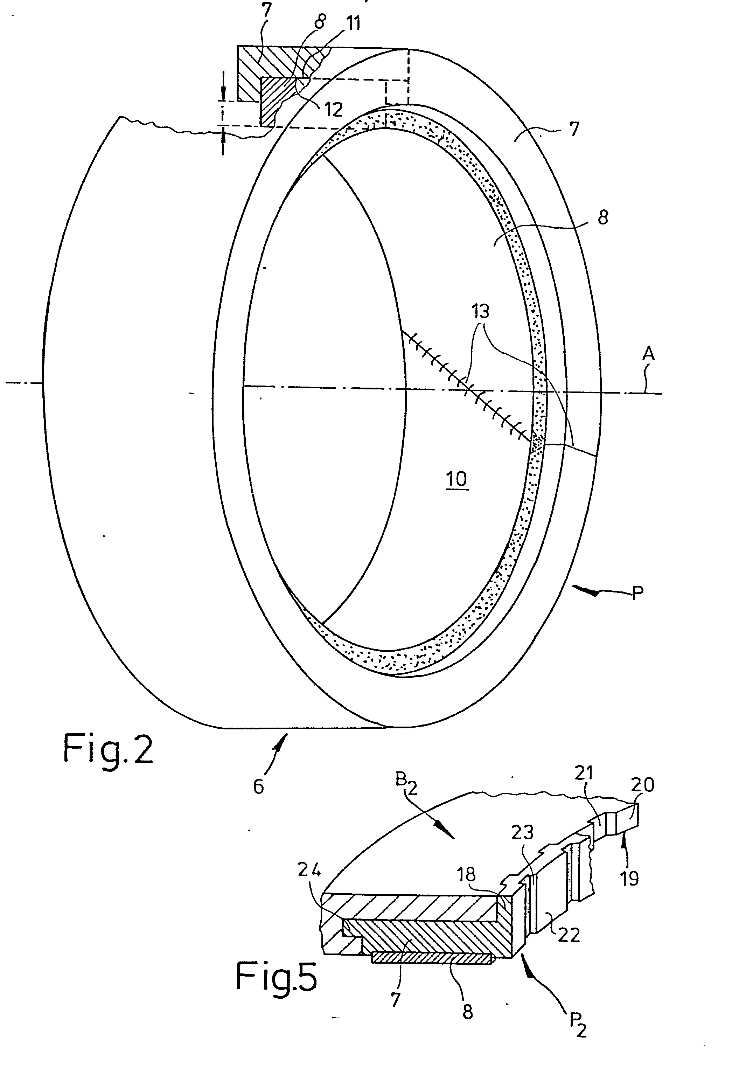

Das Trägerprofil 7 ist etwa U-förmigen Querschnittes, so dass das Stahlband 8 darin eingebettet ruht; seine freie Oberfläche 10 ragt über die beidseits verbleibenden Trägerprofiloberflächen 9 in einer Höhe i empor (Fig. 2). Die einander benachbarten Oberflächen 11, 12 der Verbundprofilteile 7, 8 sind miteinander metallisch verbunden; das Stahlband 8 wurde dem Trägerprofil 7 bei der Herstellung des Verbundprofiles P unplattiert zugeführt.

Mit 13 ist in Fig. 2 ein Schrägstoss als Verbindungsstelle der Bandenden bei Erzeugung des Ringes 6 bezeichnet.

Das Verbundprofil P gemäss Fig. 1 ist mit dem Trommelgehäuse 2 durch Schweissnähte 14, 15 verbunden. Die Schweissnaht 14 liegt an der Stossstelle zwischen Trommelgehäuse 2 und Verbundprofil P am Innendurchmesser d, die Schweissnaht 15 an der beiden Teilen 2, P gemeinsamen Stirnseite; das Verbundprofil P wird mit den für die Schweissung erforderlichen Anfasungen 16 hergestellt.

Nach dem Verbinden des aus dem Verbundprofil P geformten Ringes 6 mit dem Aluminium-Gehäuse 2 wird die so erhaltene Verbundbremstrommel B an der nach innen weisenden Stahlauflage 8 zur Glättung der Schweissnähte und zur Erzielung eines einwandfreien Rundlaufes überdreht oder überschliffen. Die Drehachse für diese Bearbeitung ist mit A bezeichnet.

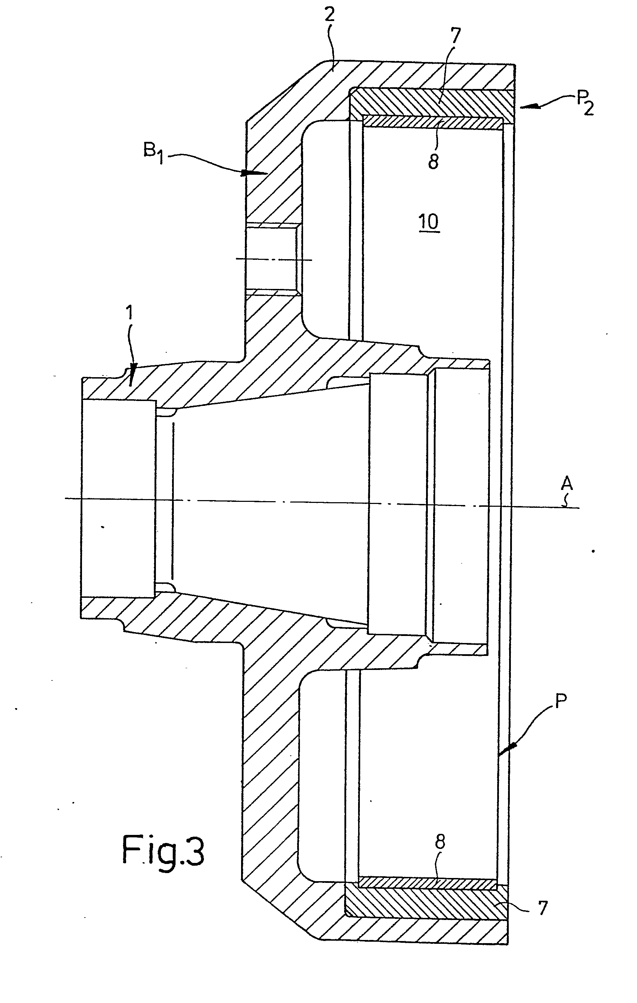

Die Ausführung der Bremstrommel $B_1$ nach Fig. 3 zeigt eine kraftschlüssige Verbindung zwischen dem Trommelgehäuse 2 und dem Verbundprofil P, die durch Einschrumpfungen des zuvor aus dem Verbundprofil P gefertigten Ringes 6 in das Trommelgehäuse 2 erreicht wird.

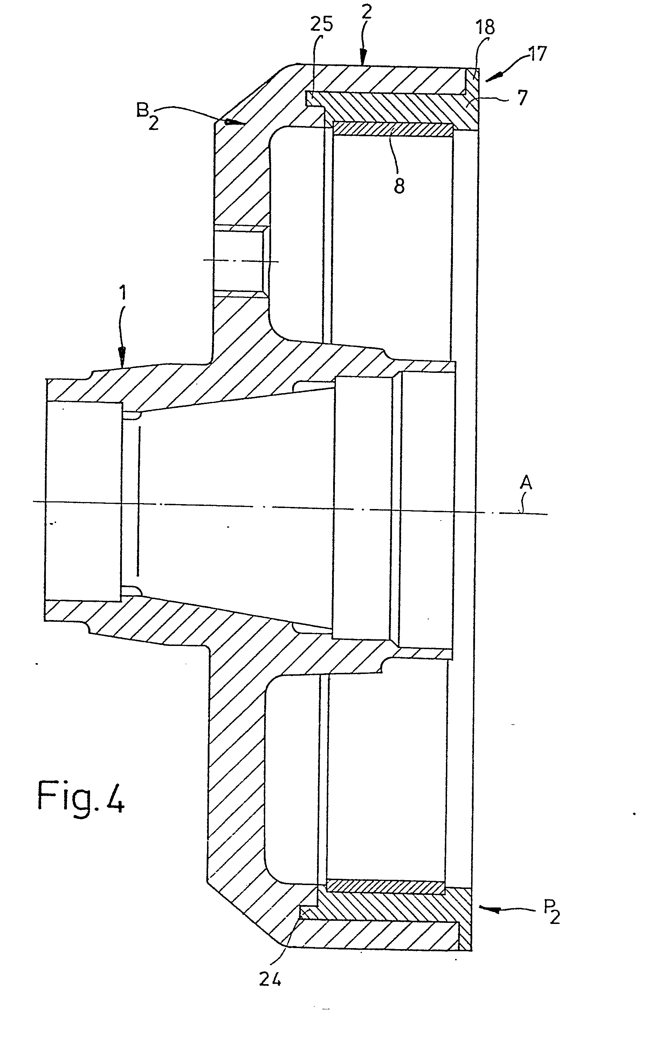

Nach Fig. 4, 5 wird das Trommelgehäuse 2 mit dem Verbundprofil $P_2$ durch eine formschlüssige Verbindung zur Bremstrommel $B_2$ zusammengefügt. Der aus dem Verbundprofil P vorgefertigte Ring 6 wird in das Trommelgehäuse 2 eingelegt und an der gemeinsamen Stirnseite 17 durch plastische Deformation eines flanschartigen Kragens 18 des Verbundprofiles $P_2$ mit der

- 5 -

dort anliegenden Fläche 19 des Trommelgehäuses 2 weist zinnenähnliche Vorsprünge 20 ergebende Einformungen 21 auf, in welcher der Kragen 18 teilweise mit aus seine der Fläche 19 anliegenden Innenfläche 28 herausgebildeten Vorsprüngen 27 eingreift. Diese Einformungen können -- nicht dargestellt -- noch schwalbenschwanzförmig hinterschnitten werden. Nach dem Deformationsvorgang sind an der Stirnfläche 22 des Verbundprofiles $P_2$ den Vorsprüngen 27 gegenüberliegenden Einkerbungen 23 vorhanden. Zur weiteren Sitzverbesserung ist das Verbundprofil $P_2$ mit einer Zunge 24 versehen, die in eine entsprechende achsparallele Nut 25 des Trommelgehäuses 2 eingesetzt ist.

- 6 -

Patentansprüche

1. Bremstrommel für eine Trommelbremse von Fahrzeugen, deren schüsselartiges Trommelgehäuse eine ringartige Innenfläche aus Stahl od. dgl. abriebfestem Werkstoff als Reibfläche für Bremsbeläge aufweist,

dadurch gekennzeichnet,

dass das Trommelgehäuse (2) aus Leichtmetall, insbesondere einer Aluminiumlegierung, geformt und an seiner Schüsselwandung mit zumindest einem Verbundprofil ($P$, $P_2$) aus einem Trägerprofil (7) und wenigstens einer Stahlauflage (8) als Reibfläche fest verbunden ist.

2. Bremstrommel nach Anspruch 1, dadurch gekennzeichnet, dass die bandartige Stahlauflage (8) mit dem Trägerprofil (7) auf dem Wege des Strangpressens metallisch verbunden ist.

3. Bremstrommel nach Anspruch 1 oder 2, dadurch gekennzeichnet, dass die Stahlauflage (8) von einem unplattierten Band gebildet ist.

4. Bremstrommel nach einem der Ansprüche 1 bis 3, dadurch gekennzeichnet, dass das Verbundprofil (P) einen im Trommelgehäuse (2) sitzenden Ring (6) bildet.

5. Bremstrommel nach einem der Ansprüche 1 bis 4, dadurch gekennzeichnet, dass das Trägerprofil (7) des Verbundprofils (P) mit dem Trommelgehäuse (2) durch Schweissnähte (14, 15) und/oder durch Einschrumpfen des Ringes (6) verbunden ist.

6. Bremstrommel nach einem der Ansprüche 1 bis 5, dadurch gekennzeichnet, dass das Verbundprofil ($P_2$) mit dem Trommelgehäuse (2) formschlüssig, z.B. durch Einkerbungen verbunden ist.

7. Bremstrommel nach Anspruch 6, dadurch gekennzeichnet, dass Trommelgehäuse (2) und Verbundprofil ($P_2$) aneinander liegende Radialflächen (19, 28) mit ineinandergreifenden Rastgliedern (21, 27) aufweisen.

8. Bremstrommel nach Anspruch 6 oder 7, dadurch gekennzeichnet, dass das Verbundprofil ($P_2$) mit Zungen (24) in achsparallele Rastnuten (25) des Trommelgehäuses (2) eingreift.

Fig.1

0019583

7
8
11
12
7
8
13
10
A
P

## Fig.2

6

B₂
21
20
23
24
18
19
22
7
8
P₂

## Fig.5

$-\sfrac{3}{4}-$

Fig.3

0019583

- 4/4 -

Fig.4

## EUROPÄISCHER RECHERCHENBERICHT

Europäisches Patentamt

Nummer der Anmeldung

EP 80 81 0140

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 3 066 766 (MINOR)<br>  * Spalte 1, Zeile 56 - Spalte 2, Zeile 11; Figuren 1-6 *<br><br>-- | 1,4,6,8 | F 16 D 65/10 |
| | US - A - 2 382 570 (KRAFT)<br>  * Seite 1, rechte Spalte, Zeile 28 - Seite 2, linke Spalte, Zeile 11; Figuren 1-3 *<br><br>-- | 1,4,5 | |
| | US - A - 1 686 346 (SANFORD)<br>  * Seite 1, Zeilen 53-72; Figuren 1,2 *<br><br>-- | 1 | **RECHERCHIERTE SACHGEBIETE (Int. Cl. 3)**<br><br>F 16 D 65/00<br>B 60 T 1/00 |
| | GB - A - 640 963 (THE BIRMINGHAM ALUMINIUM CASTING)<br>  * Seite 2, Zeilen 90-118 *<br><br>-- | 1 | |
| | CH - A - 449 374 (BRIDGESTONE CYCLE INDUSTRY)<br>  Spalte 5, Zeile 26 - Spalte 6, Zeile 63; Figur 4 *<br><br>-- | 1 | |
| A | FR - A - 1 010 748 (FORD) | 1 | |
| A | DE - B - 1 026 644 (FUCHS)<br><br>---- | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-08-1980 | BRAEMS |

EPA form 1503.1 06.78